# EUROPEAN PATENT SPECIFICATION

(11) **EP 3 130 491 B1**
(45) Date of publication and mention of the grant of the patent: **18.12.2019**
(21) Application number: 15180981.1
(22) Date of filing: 13.08.2015
(51) Int. Cl.: B60G 17/052, F16K 31/06, G05B 11/28, H01F 7/16, F16K 31/08, F16K 31/40

(54) **APPARATUS AND METHOD FOR CONTROLLING AN ELECTRO-PNEUMATIC LEVELING VALVE**
VORRICHTUNG UND VERFAHREN ZUR STEUERUNG EINES ELEKTROPNEUMATISCHEN NIVEAUREGELVENTILS
APPAREIL ET PROCÉDÉ POUR COMMANDER UNE SOUPAPE DE MISE À NIVEAU ÉLECTROPNEUMATIQUE

(43) Date of publication of application: 15.02.2017
(73) Proprietor: KNORR-BREMSE Systeme für Nutzfahrzeuge GmbH, 80809 München (DE)
(72) Inventor: Fojtyik, Gábor, 2310 Szigetszentmiklos (HU); Naszek, Attila, 1112 Budapest (HU); Csontos, Peter, 6750 Algyö (HU); Höller, Christian, 8057 Zürich (CH); Vanyi, Denes, 1119 Budapest (HU)

(56) References cited:
- EP-A1- 0 650 002
- EP-A1- 2 199 123
- EP-A1- 2 902 682
- US-A1- 2013 192 681

## Description

The present invention relates to an apparatus and a method for controlling an electro-pneumatic leveling valve and, in particular, to a pulse width modulated (PWM) actuation of the electro-pneumatic (EP) leveling valve for a proportional control of mass flows.

Automotive vehicles may comprise leveling systems to automatically adjust the suspension of the vehicle, for example, to compensate for various load conditions. These systems are installed in a wide variety of vehicles ranging from passenger cars to semi-trailers. A conventional leveling system includes pneumatic suspension elements like bellows that can be inflated or deflated to control the height of a frame with respect to the axle. Furthermore, the control of the leveling system is achieved in conventional systems by a valve, which can be either be opened to pressurize the bellow(s) when lifting the vehicle or be closed to exhaust the bellow(s) when lowering the vehicle.

However, conventional systems provide merely an insufficient control over the pneumatic flow. In addition, if the vehicle is heavily loaded a significant amount of noise is generated when lowering the vehicle, because the noise depends on the mass flow (the amount of air) of the exhaust.

Conventional systems are disclosed in the following documents. EP 2 199 123 A1 describes a control system for pneumatic suspensions of a vehicle comprising a single solenoid valve for each axle and one solenoid valve for the charging and the discharging of air from a compressed air tank. EP 2 902 682 A1 discloses a pilot-operated valve with a floating piston. EP 0 650 002 A1 discloses another conventional self-holding type solenoid valve. US 2013/0192681 A discloses a compressed air supply system for operating a pneumatic assembly such as an air spring assembly of a vehicle.

Therefore, there is a demand for an improved control of the leveling system, which overcomes the aforementioned problems.

This problem is solved by an apparatus according to claim 1, a method according to claim 13, and computer program product according to claim 15. Claims 2 to 12, and 14 refer to specifically advantageous realizations of the subject matter of claims 1 and 13.

The present invention relates to an apparatus for controlling an electro-pneumatic leveling valve by a control signal. The leveling valve comprises a magnet with an armature, wherein, in response of receiving the control signal, the armature is movable between a first position to exhaust the leveling valve and a second position to pressurize the leveling valve. The apparatus comprises a generator module configured to generate a pulse width modulated (PWM) signal as the control signal and to transmit the PWM signal to the magnet, wherein the PWM signal comprises a first signal level driving the armature in the first position and a second signal level driving the armature in the second position and a duty cycle defining a duration of the first signal level to control a pneumatic flow through the leveling valve.

The PWM signal may or may not be a periodic signal with a frequency such that the first signal level and the second signal level repeat with a predetermined period. When the PWM signal is not periodic, the first and second signal levels may be adjusted by the generator module based on the needs (e.g. the speed) to move the armature in the first position or in the second position, or the desire to let the armature stay in the first position or in the second position.

The armature may be adapted to be moved between the first and second position with a frequency of the PWM signal up to a threshold frequency, i.e. the armature is unable to be moved between the first and second positions with a frequency of the PWM signal above the threshold frequency. In a further embodiment the generator module may be configured to generate a first periodic PWM signal with a first frequency being below the threshold frequency and to generate a second periodic PWM signal with a second frequency being above the threshold frequency.

As a result, the apparatus may be configured to operate the leveling valve in a first mode (low frequency mode), in which the armature is either in the first position or in the second position, or in a second mode (high frequency mode), in which the armature is floating without alternately moving between the first and the second position.

In yet another embodiment the generator module may be configured, when the generator module generates a period PWM signal with the second frequency, to move the armature to a defined position between the first position and the second position by controlling the duty cycle of the PWM signal. I.e., when the frequency of the PWM signal is above the threshold value (i.e. in the second mode of operation), the generator module may be configured to move the armature to a defined (fixed) position without moving back and forth.

Dependent on the concrete magnet, the threshold frequency may be between 100 Hz and 300 Hz or about 200 Hz. The first frequency may be any frequency below this threshold frequency (e.g. 50Hz, 100 Hz, 150Hz, etc.) and the second frequency may be any frequency above this threshold frequency (e.g. 200Hz, 250 Hz, 300Hz, 350, etc.). These frequencies may be selected based on an optimization, i.e. the first frequency and/or second frequency ensure, on the one hand, that the armature can follow the frequency reliably (or not) while minimizing the noise during operation and allowing an broad operation range of operation or tuning parameters to a desired value (e.g. the speed of rising and lowering the vehicle, with respect to fine adjustments of the vehicle level, response time, minimizing the friction etc.).

In yet another embodiment the generator module is configured to provide a switching signal for connecting either a pressure supply unit or an exhaust to the leveling valve so that a flow from the pressure supply unit or to the exhaust is controllable by varying the duty cycle of the PWM signal.

Therefore, even during the process of lowering the vehicle, the control signal fluctuates between the two states and the leveling valve may connect to the pressure supply unit (i.e. will switch). Similarly, during the process of lifting the vehicle the leveling valve continues to switch between the two states. This distinguish the present invention from the conventional systems which during lifting always provide pressurized air and during lowering always provide a connection to the exhaust. An advantage of the operation according to the present invention is that the non-stationary operation lowers the friction in the system.

The present invention relates also to an electric control unit (ECU) for controlling an electro-pneumatic leveling valve that comprises one of the described apparatuses.

The present invention relates also to an air suspension system comprising an electro-pneumatic leveling valve with a magnet comprising an armature to be moved between the first and second position with the mentioned electric control unit or one of the mentioned apparatuses.

The air suspension system may be configured to couple to at least one bellow to lower and to lift a vehicle, to a pressure supply unit to supply compressed air, and to an exhaust. The leveling valve may optionally comprise: a first flow path providing a flow connection to the at least one bellow, a second flow path providing a flow connection to the pressure supply unit or the exhaust, a first chamber with the armature, a first piston, and a second chamber. The first piston may be movable in the second chamber to connect or disconnect the first with the second flow path. The leveling valve may further comprise a magnet valve exhaust, a control pressure inlet for providing a control pressure. The first position opens a magnet valve exhaust and the second position opens the control pressure inlet. The second chamber may be connected to the first chamber so that in the second position the control pressure drives the first piston to connect or disconnect the first and second flow paths.

Optionally, the leveling valve further comprises a second piston biased to disconnect the first from the second flow path. The first piston may be configured to move the second piston to connect the first flow path with the second flow path upon increasing a volume of the second chamber.

Optionally, the air suspension system may further comprise a switching valve configure to connect either the pressure supply unit or the exhaust to the second flow path.

Optionally, the air suspension system further comprises the at least one bellow, the pressure supply unit, and the exhaust.

The present invention relates also to a vehicle with an air suspension system as descripted before.

The present invention relates also to a method for controlling an electro-pneumatic leveling valve by a control signal. The leveling valve comprises a magnet with an armature, wherein in response of receiving the control signal the armature is movable between a first position to exhaust the leveling valve and a second position to pressurize the leveling valve. The method comprises the step of generating a pulse width modulated (PWM) signal as the control signal, wherein the PWM signal comprises a first signal level, a second signal level, and a duty cycle defining a duration of the first signal level. The method further comprises transmitting the PWM signal to the magnet to drive the armature in the first position with the first signal level and to drive the armature in the second position with a second signal level. Furthermore, the method comprises a step of varying the duty cycle to control to control a pneumatic flow through the leveling valve.

In the step of generating the PWM signal, a periodic signal with a frequency may be generated, and the method may further comprise switching between a first operation mode and a second operation mode by selecting the frequency. In the first operation mode the frequency is below a threshold frequency. The threshold frequency may be defined as the limit after which the armature is unable to follow the signal, i.e. to be moved between the first and second positions with such high frequency. In the second operation mode the frequency is above the threshold frequency. The method may further comprise in the second operation mode, varying a position of the armature between the first position and the second position by the step of varying the duty cycle to control a pneumatic flow through the leveling valve.

This method may also be implemented in software or a computer program product. Thus, the present invention relates also to a computer program product having a program code stored thereon for performing the above-mentioned method, when the computer program is executed on a computer or a processor.

In addition, all functions described previously in conjunction with the apparatus may be realized as further method steps and be implemented in software or software modules. Various embodiments of the present invention will be described in the following by way of examples only, and with respect to the accompanying drawings, in which:
- Fig. 1: depicts an apparatus for controlling an electro-pneumatic leveling valve according to an embodiment of the present invention.
- Fig. 2: depicts an exemplary pulse width modulated signals.
- Fig. 3: illustrates the operation of an air suspension system using a PWM signal as control signal.
- Fig. 4: depicts further details of the apparatus according to the present invention.
- Fig. 5: shows a flow diagram of a method for controlling an electro-pneumatic leveling valve.

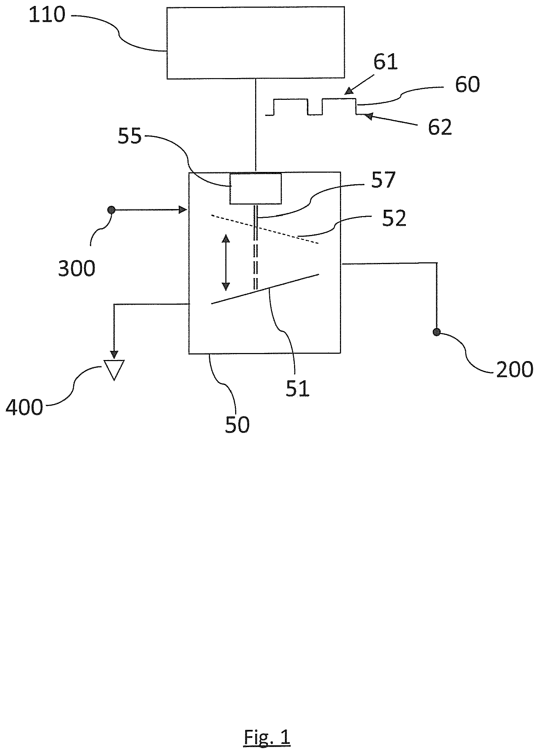

Fig. 1 depicts an apparatus for controlling an electro-pneumatic leveling valve 50 by a control signal 60 according to a first embodiment of the present invention. The leveling valve 50 comprises a magnet 55 with an armature 57, wherein, in response of receiving the control signal 60, the armature 57 is movable between a first position 51 to exhaust the leveling valve 50 and a second position 52 to pressurize the leveling valve 50. The apparatus comprises a generator module 110 configured to generate a pulse width modulated (PWM) signal as the control signal 60 and to control the magnet 50 with the PWM signal. The PWM signal 60 comprises a first signal level 61 driving the armature 57 into the first position 51 and a second signal level 62 driving the armature 57 into the second position 52 and a duty cycle T defining a duration of the first signal level 61 (or a duration of the second signal level 62) to control a pneumatic flow through the leveling valve 50. In a further embodiment, the first signal level 61 drives the armature 57 into the second position 52 and a second signal level 62 drives the armature 57 into the first position 52.

In the first position 51, the leveling valve 50 may connect an air suspension system 200 with an exhaust 400 to lower a vehicle. In the second position 51, the leveling valve 50 may connect the air suspension system 200 with a pressure supply unit 300 to lift the vehicle. The speed of lifting and lowering and the mass flow through the leveling valve 50 is controlled using the PWM signal 60.

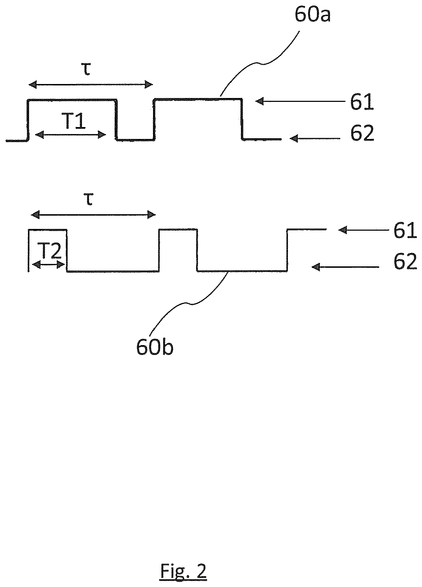

**Fig. 2** depicts a first PWM signal 60a and a second PWM signal 60b. Both PWM signals 60 take only two levels, a first level 61 and a second signal level 62. The duration of the first signal level 61 between two subsequent second signal levels 62 defines the duty cycle T (T1, T2). The first PWM signal 60a comprises first duty cycles T1 and the second PWM signal 60b comprises a second duty cycle T2 being shorter than the first duty cycle T1. In an equivalent setup the duty cycle may also be defined using the length of the second signal level 62 between two subsequent first signal levels 61.

For example, the first PWM signal 60a has a duty cycle of more than 50% implying that a time period T1, in which the signal is at the first level 61, is longer than it is at the second level 62. On the other hand, the second PWM signal 60b has a second duty cycle T2 of less than 50% implying that the duty cycle T2 is shorter than the period, in which the PWM signal is at the second level 62. Both PWM signals 60a, 60b comprise about the same frequency f=1/τ, wherein τ defines a period length of the depicted periodic PWM signals 60. Therefore, the first duty cycle T1 yields a net exhausting (it is longer in the exhausting state than in the pressurizing state) and thus will result in a lowering of the vehicle. The second duty cycle T2 yields an overall pressurizing (it is longer in the in the pressurizing state than in the exhausting state) and thus will result in a lifting of the vehicle.

The first level 61 may define one voltage level and the second level 62 may define another voltage level (one of which may be a mass potential). The first level 61 may be a positive voltage whereas the second level 62 may be a negative voltage.

The duty cycle T and the period length τ can be selected freely and may also change with the time. If the PWM signal 60 is periodic, the period length τ should be constant and the PWM signal 60 has a predetermined frequency f=1/τ. The generator module 110 may configured to tune the frequency f below or above the threshold frequency defined as the frequency up to which the armature of the magnet 50 is able to follow the signal levels of the PWM signal 60.

Therefore, if the frequency f of the PWM signal 60 is below the threshold value (a low frequency operation mode), the armature 57 will move between the first and the second positions 51, 52 and will stay at these positions for the durations of the first levels 61 or the second levels 62. However, if the frequency f is above the threshold frequency (a high frequency operation mode), the armature 57 is not able to follow the frequency f of the PWM signal 60. As consequence, the position of the armature 57 is defined by the duty cycle T without or only little fluctuations.

For a better understanding, consider, for example, a PWM signal with a maximized duty cycle T=Tmax (i.e. Tmax is basically equal to τ). In this case, the armature 57 will remain at the position defined by the first level 61 (e.g. the first position 51). On the other hand, if the duty cycle T is minimized T=Tmin (i.e. Tmin is basically equal to 0) implying that the PWM signal 60 is basically always at the second level 62, in which case the armature 57 will stay at the position defined by the second level 62 (e.g. the second position 52). Even small interruptions, where the PWM signal switches to the first level 61, may not be noticed by the armature 57. If the duty cycle T is between these two limits, e.g. T is increased from the minimum value (Tmin), the armature 57 will move away from the first position 51 and, because the armature 57 cannot follow the PWM signal 60 having a frequency f above the threshold value, the armature 57 will move to a defined position between the first and second position 51, 52. This defined position depends on the length of the particular duty cycle T.

Hence, this second, high frequency, operation mode allows that the mass flow (i.e. the amount of air) per time unit through the leveling valve can continuously or proportionally be adjusted by selecting a duty cycle T defining a desired position of the armature 57. Since the mass flow is associated with the generated noise this, in turn, enables the apparatus to lower the noise production when controlling the speed of lowering or lifting the vehicle by activating the leveling valve 50.

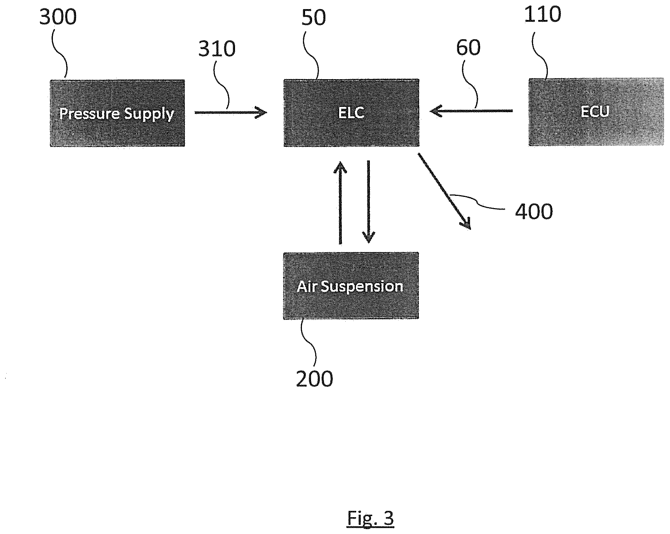

Fig. 3 further illustrates the operation of an air suspension 200 coupled to the leveling valve 50 controlled by the PWM signal 60 as described before. For example, as shown in Fig. 3, the apparatus 110 can be part of an electronic control unit (ECU) of a vehicle, which generates and transmits the PWM signal 60 to the electro-pneumatic leveling valve 50. The electro-pneumatic leveling valve 50 controls the airflow in and out of the air suspension system 200 (for example to enable a proportional airflow) by connecting the air suspension 200 to a pressure supply unit 300 and/or to the exhaust 400.

The pressure supply unit 300 provides a pressurized airflow 310 to the electro-pneumatic leveling valve 50, which upon switching the armature 57 of the magnet 55 provides the pressurized airflow 310 to the air suspension system 200 (for example to bellows; not shown in Fig. 3) to lift the vehicle. This pressurization may relate to one signal level of the PWM signal 60, either the first level 61 or the second level 62. The other of the two signal levels will operate the electro-pneumatic leveling valve 50 such that the pressurized air 310 is interrupted and the air of the suspension system 200 is directed to an exhaust 400.

In the second operation mode, where the frequency f is above the threshold value, both the pressure supply unit 300 and the exhaust 400 may be connected to the are suspension system 200. Since the leveling valve 50 does not completely open or close the respective connections there is a net pressurization or a net exhaust (e.g. if the exhaust is more open than the pressure supply in closed) with speed dependent on the particular position. Moreover, the exhaust speed and/or the pressurization speed can be fine tuned to a desired level, thereby reducing in particular also the noise production.

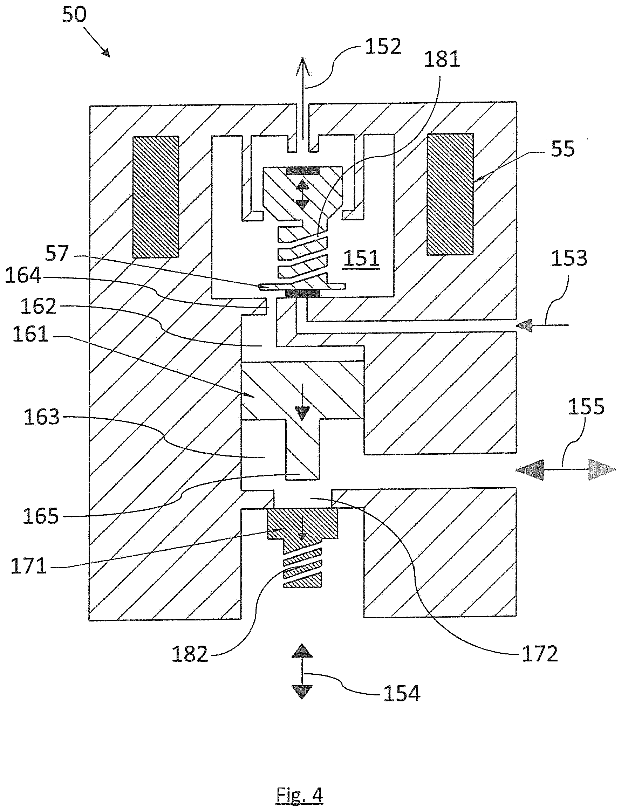

**Fig. 4** depicts further details of the EP leveling valve 50 that, according to the present invention, is controlled by the PWM signal 60 as described in detail with Fig. 2. The EP leveling valve 50 comprises (e.g. within a housing) the magnet 55, a first chamber 151, a second chamber 162 (e.g. a valve chamber), a third chamber 163, a control pressure inlet 153, a magnet valve exhaust 152, a first flow path 154 to/from an exemplary air bellow and a second flow path 155 from the pressure supply unit or to the exhaust. The control pressure inlet 153 is connected to a first chamber 151. The magnet valve exhaust 152 provides an outlet for the first chamber 151 and the first chamber 151 is connected to the second chamber 162 via a first passage 164.

The magnet 55 includes the armature 57 and receives the PWM signal 60 from the generation module 110 (not shown in Fig. 4). The armature 57 is movable within a first chamber 151 between an upper position (e.g. the second position 52) and a lower position (e.g. the first position 51). In the upper position, the magnet valve exhaust 152 is closed and the control pressure inlet 153 is opened. In the lower position, the control pressure inlet 153 is closed and the magnet valve exhaust 152 is opened. Moreover, the armature 57 may be pre-strained, for example, by a first spring 181 providing a biasing force to close the control pressure inlet 153 as a default position.

The third chamber 163 is connected to the second flow path 155 and is separated from the second chamber 162 by a first piston 161. The first piston 164 comprises a protrusion 165 and is configured to move between two positions, thereby lowering/increasing a volume of the second chamber 162 and, at the same time, increasing/decreasing the volume of the third chamber 163. The first flow path 154 is separated from the third chamber 163 by a second piston 171. The second piston 171 is configured to open/close a second passage 172 between the third chamber 163 and the first flow path 154. The protrusion 165 of the first piston 161 is formed such that it will abut the second piston 172 upon moving the first piston 161 towards the second piston 172 while increasing the volume of the second chamber 162. When the volume of the second chamber 162 further increases, the first piston 161 will push the second piston 172 to open the second passage 172, thereby connecting the first flow path 154 with the second flow path 155. The second piston 171 is pre-strained, e.g., by a second spring 182 providing a biasing force to close the second passage 172 so that in a default position the second piston 171 disconnects the first flow path 154 from the third chamber 163.

Therefore, by providing the PWM signal 60 to magnet 55, the position of the armature can be controlled to be in the upper position (for one signal level) or lower position (for the other signal level). In the upper position, the control pressure 153 increases the pressure in the first chamber 151 and, via the first passage 164, also in the second chamber 162. This will drive the first piston 161 toward the second piston 171 and, after abutment, will push the second piston 171 further to open the second passage 172. As a result, the first flow path 154 is fluidly connected to the second flow path 155, thereby allowing a pressurizing/exhausting of the bellow(s) of an air suspension system.

In order to switch between the pressurizing and exhausting of the bellow(s), a further valve may be provided that connect the second flow path 155 either to the pressure supply unit 300 or to the exhaust 400 (not shown in Fig. 4). For this switching any conventional valve may be used, which may likewise be controllable by the generator module 110 that issues a respective control signal.

According the present invention, the mass flow between the first and second flow paths 154, 155 can be fine-tuned based on a PWM signal 60 controlling the magnet 55. In particular, the PWM control is used to control the normal "on/off' operation of a magnetic valve 50 of the EP leveling system. As set out before, the PWM signal 60 comprises a set frequency f and a variable duty cycle T, which is changed with the electric control unit 110 to control the mass flow of filling/exhausting of the EP valve 50 using the control pressure 153 and the magnet valve exhaust 152.

As described in previous embodiments, the apparatus can control the air flow through the valve 50 by the driving the magnet 55 in a first operation mode or in a second operation mode.

In the first, low frequency operation mode, the armature 57 is either in the upper or the lower position and the durations (in the upper or lower position) are controlled by the duty cycle T. Hence, the first piston 161 will move stepwise back and forth, thereby allowing a fine-tuned opening/closing of the second passage 172 to pressurize/exhaust the exemplary bellow(s). In this way, the duty cycle T defines the opening periods of valve 50.

In the second, high frequency operation mode the armature 57 is unable to follow the frequency of the PWM signal 60 and the duty cycle T will control the position of the armature 57, not being at the upper or lower position, but at an intermediate position. Therefore, by varying the duty cycle T, the position oft the armature 57 can continuously move between the upper and lower position (see description to Fig. 2 for further details).

Therefore, the operation permits a control of the speed of lifting and lowering of the vehicle in a proportional manner and, in particular, to control the mass flow through the valve accurately.

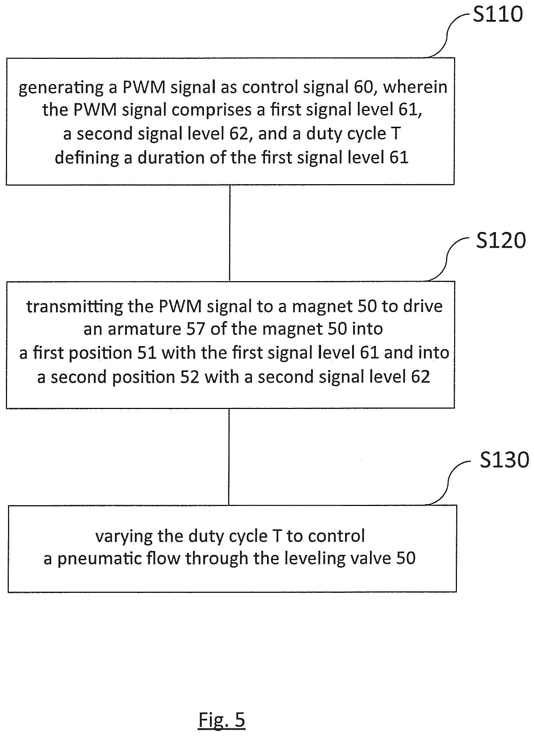

**Fig. 5** shows a flow diagram for a method for controlling an electro-pneumatic leveling valve 50 by a control signal 60. The method comprises a step of generating S110 a pulse width modulated (PWM) signal as the control signal 60 for controlling a magnet 55, wherein the PWM signal 60 comprises a first signal level 61, a second signal level 62, and a duty cycle T defining a duration of the first signal level 61. The method further comprises the step of transmitting S120 the PWM signal to the magnet 55 to drive the armature 57 into the first position 51 with the first signal level 61 and to drive the armature 57 into the second position 52 with a second signal level 62. Finally, the method comprises a step of varying S130 the duty cycle T to control a pneumatic flow through the leveling valve 50.

The method may also be implemented on a computer. The computer may be any processing unit comprising, for example, a processor, a non-volatile memory for storing the computer program, a data bus for transferring data between the non-volatile memory and the processor and, in addition, input/output interfaces for inputting and outputting data from the computer.

In addition, all functions described previously in conjunction with the apparatus can be realized as further method steps and be implemented in software or as software modules.

Embodiments of the present invention may be summarized as follows.

There are two different ways of controlling the valve 50. In a first mode, a low-frequency control, the frequency of the PWM signal 60 is below a predetermined threshold value (for example 200 Hz), where the magnetic valve 50 can open and close fast enough to pressurize the valve 50 and slowly push the pistons 161, 171 to control the mass flow of the electro-pneumatic valve 50. The second mode, a high-frequency control mode, is defined by having a frequency of the PWM signal 60 which is above the predetermined threshold frequency (for example higher than 200 Hz), where the duty cycle T would control the position of the magnetic valve opening so that the pressurization speed of the valve chamber 162 is under control. This reduces the friction of the magnetic valve 50 compared to the first mode of operation, so that the wear of the valve 50 is lowered.

Further embodiments of the present invention relate to a control of mass flows through a solenoid actuator valve (see Fig. 4) to have a proportional valve only by using a simple "on/off' magnetic valve 55 actuated by the PWM signal 60.

A further embodiment relates to a control of the leveling speed of the air bellows of an air suspension system 200 to control the speed of lowering and rising of the vehicle platform.

Yet another embodiment relates to a reduced noise production by controlling the speed of the lowering of the vehicle by the PWM controlled valve (see Fig. 3). This is achieved because the noise is dependent on the mass flow of the exhaust 400.

While each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### BEZUGSZEICHENLISTE

- 50: leveling valve
- 51: first position
- 52: second position
- 55: magnet
- 57: armature of the magnet
- 60: control signal
- 61: first signal level
- 62: second signal level
- 110: generator module
- 151: first chamber
- 152: magnet valve exhaust
- 153: control pressure inlet
- 154: first flow path
- 155: second flow path
- 161: first piston
- 162: second chamber
- 163: third chamber
- 164: first passage
- 165: protrusion of the first piston
- 171: second piston
- 172: second passage
- 181: first spring
- 182: second spring
- 200: an air suspension system
- 300: a pressure supply unit
- 310: pressurized airflow
- 400: exhaust
- T: duty cycle
- τ: period

## Claims

1. An apparatus for controlling an electro-pneumatic leveling valve (50) of a vehicle by a control signal (60), the leveling valve comprising a magnet (55) with an armature (57), wherein in response of receiving the control signal (60) the armature (57) is movable between a first position (51) to exhaust the leveling valve (50) and a second position (52) to pressurize the leveling valve (50)
**characterized by**
a generator module (110) configured to generate a pulse width modulated (PWM) signal as the control signal (60) for controlling the speed of lowering the vehicle and to transmit the PWM signal to the magnet (50), wherein the PWM signal comprises a first signal level (61) driving the armature (57) in the first position (51) and a second signal level (62) driving the armature (57) in the second position (52) and a duty cycle (T) defining a duration of the first signal level (61) to control a pneumatic flow through the leveling valve (50).

2. The apparatus according to claim 1, the armature (57) being unable to be moved between the first and second positions (51, 52) with a frequency of the PWM signal (60) above a threshold frequency,
the apparatus being **characterized in that**
the generator module (110) is configured to generate a first periodic PWM signal (60) with a first frequency being below the threshold frequency and to generate a second periodic PWM signal (60) with a second frequency being above the threshold frequency.

3. The apparatus according to claim 2, **characterized in that**
the generator module (110) is further configured to move the armature (57) to a defined position between the first position (51) and the second position (52) by controlling the duty cycle (T) of the PWM signal (60), when the generator module (110) generates a period PWM signal (60) with the second frequency.

4. The apparatus according to claim 3, **characterized in that**
the threshold frequency is between 100 Hz and 300 Hz or about 200 Hz.

5. The apparatus according to any one of the preceding claims, **characterized in that** the generator module (110) is further configured to provide a switching signal for connecting either a pressure supply unit (300) or an exhaust (400) to the leveling valve (50) so that a flow from the pressure supply unit (300) or to the exhaust (400) is controllable by varying the duty cycle (T).

6. An electric control unit (ECU) for controlling an electro-pneumatic leveling valve (50)
**characterized by**
an apparatus according to any one of claims 1 to 5.

7. An air suspension system for a vehicle, the air suspension system comprising an electro-pneumatic leveling valve (50) with a magnet (55) comprising an armature (57) to be moved between the first and second position (51, 52)
**characterized by**
an apparatus according to any one of claims 1 to 5 or an electric control unit according to claim 6.

8. The air suspension system according to claim 7, **characterized in that**
the air suspension system is configured to couple to at least one bellow for lowering and lifting the vehicle, and to couple to a pressure supply unit (300) for supplying compressed air, and to couple to an exhaust (400) for exhausting compressed air,
and **in that** the leveling valve (50) further comprises:
a first flow path (154) providing a flow connection to the at least one bellow,
a second flow path (155) providing a flow connection to the pressure supply unit (300) or the exhaust (400),
a first chamber (151) with the armature (57),
a first piston (161),
a second chamber (162), wherein the first piston (161) is movable in the second chamber (162) to connect or disconnect the first flow path (154) with/from the second flow path (155),
a magnet valve exhaust (152),
a control pressure inlet (153) for providing a control pressure,
wherein the first position (51) opens a magnet valve exhaust (152) and the second position (52) opens the control pressure inlet (153), the second chamber (162) being connected to the first chamber (151) so that, in the second position (52), the control pressure drives the first piston (161) to connect or disconnect the first flow path (154) with/from the second flow path (155).

9. The air suspension system according to claim 8, **characterized in that**
the leveling valve (50) further comprises a second piston (171) biased to disconnect the first flow path (154) from the second flow path (155) and **in that** the first piston (161) is configured to move the second piston (171) to connect the first flow path (154) with the second flow path (155) upon increasing a volume of the second chamber (162).

10. The air suspension system according to claim 8 or claim 9, **characterized by** further comprising a switching valve configured to connect either the pressure supply unit (300) or the exhaust (400) to the second flow path (155).

11. The air suspension system according to any of claims 8 to 10, **characterized by** further comprising the at least one bellow, the pressure supply unit (300), and the exhaust (400).

12. A vehicle, **characterized by**
an air suspension system according to any one of claims 8 to 11.

13. A method for controlling an electro-pneumatic leveling valve (50) of a vehicle by a control signal (60), the leveling valve comprising a magnet (55) with an armature (57), wherein, in response of receiving the control signal (60), the armature (57) is movable between a first position (51) to exhaust the leveling valve (50) and a second position (52) to pressurize the leveling valve (50),
the method being **characterized by**
generating (S110) a pulse width modulated (PWM) signal as the control signal (60) for controlling the speed of lowering the vehicle, wherein the PWM signal comprises a first signal level (61), a second signal level (62), and a duty cycle (T) defining a duration of the first signal level (61);
transmitting (S120) the PWM signal to the magnet (50) to drive the armature (57) into the first position (51) with the first signal level (61) and to drive the armature (57) into the second position (52) with a second signal level (62); and
varying (S130) the duty cycle (T) to control a pneumatic flow through the leveling valve (50).

14. The method according to claim 13, **characterized in that**
the step of generating (S110) generates the PWM signal (60) as a periodic signal with a frequency (f),
and **in that** the method further comprises
switching in a first operation mode by selecting the frequency (f) below a threshold frequency,
switching in a second operation mode by selecting the frequency (f) above the threshold frequency, wherein the armature (57) is unable to be moved between the first and second positions (51, 52) with a frequency of the PWM signal (60) above a threshold frequency, and
varying a position of the armature (57) between the first position (51) and the second position (52), in the second operation mode, by the step of varying (S130) the duty cycle (T).

15. A computer program having a program code for performing the method of claims 13 or claim 14, when the computer program is executed on a computer or a processor.

## Patentansprüche

1. Vorrichtung zur Steuerung eines elektropneumatischen Niveauregelventils (50) eines Fahrzeugs durch ein Steuersignal (60), wobei das Niveauregelventil einen Magnet (55) mit einem Anker (57) umfasst, wobei der Anker (57) auf Empfang des Steuersignals (60) zwischen einer ersten Stellung (51) zum Ablassen des Niveauregelventils (50) und einer zweiten Stellung (52) zur Beaufschlagung des Niveauregelventils (50) bewegbar ist,
**gekennzeichnet durch**
ein Generatormodul (110), das zur Erzeugung eines pulsbreitenmodulierten (PWM) Signals als Steuersignal (60) zum Regeln der Herunterlassgeschindigkeit das Fahrzeugs und zur Übertragung des PWM-Signals an den Magnet (50) ausgelegt ist, wobei das PWM-Signal einen ersten Signalpegel (61), der den Anker (57) in die erste Stellung (51) treibt, und einen zweiten Signalpegel (52), der den Anker (57) in die zweite Stellung (52) treibt, sowie eine Impulsperiode (T), die die Dauer des ersten Signalpegels (61) zur Steuerung einer Druckluftströmung durch das Niveauregelventil (50) bestimmt, umfasst.

2. Vorrichtung nach Anspruch 1, wobei der Anker (57) bei einer über einer Schwellenfrequenz liegenden Frequenz des PWM-Signals (60) nicht zwischen der ersten und der zweiten Stellung (51, 52) bewegbar ist,
wobei der Vorrichtung **dadurch gekennzeichnet ist, dass**
das Generatormodul (110) zur Erzeugung eines ersten zyklischen PWM-Signals (60) mit einer ersten unter der Schwellenfrequenz liegenden Frequenz und zur Erzeugung eines zweiten zyklischen PWM-Signals (60) mit einer zweiten über der Schwellenfrequenz liegenden Frequenz ausgelegt ist.

3. Vorrichtung nach Anspruch 2, **dadurch gekennzeichnet, dass**
das Generatormodul (110) weiter zur Bewegung des Ankers (57) in eine bestimmte Stellung zwischen der ersten Stellung (51) und der zweiten Stellung (52) durch Regeln der Impulsperiode (T) des PWM-Signals (60) ausgelegt ist, wenn das Generatormodul (110) ein PWM-Signal (60) mit der zweiten Frequenz erzeugt.

4. Vorrichtung nach Anspruch 3, **dadurch gekennzeichnet, dass** die Schwellengrequenz zwischen 100 Hz und 300 Hz liegt oder ca. 200 Hz beträgt.

5. Vorrichtung nach einem der vorgergehenden Ansprüche, **dadurch gekennzeichnet, dass**
das Generatormodul (110) weiter zur Bereitstellung eines Schaltsignals zum Anschließen einer Druckversorgungseinheit (300) oder eines Ablasses (400) an das Niveauregelventil (50) ausgelegt ist, so dass eine Strömung von der Druckversorgungseinheit (300) oder zum Ablass (400) durch Variieren der Impulsperiode (T) gesteuert werden kann.

6. Elektrische Steuereinheit (ECU) zur Steuerung eines elektropneumatischen Niveauregelventils (50),
**gekennzeichnet durch**
eine Vorrichtung nach einem der Ansprüche 1 bis 5.

7. Luftfederungssystem für ein Fahtzeug, umfassend ein elektropneumatisches Niveauregelventil (50) mit einem Magnet (55), der einen zwischen einer ersten und einer zweiten Stellung (51, 52) zu bewegenden Anker (57) umfasst,
**gekennzeichnet durch**
eine Vorrichtung nach einem der Ansprüche 1 bis 5 oder eine elektrische Steuereinheit nach Anspruch 6.

8. Luftfederungssystem nach Anspruch 7, **dadurch gekennzeichnet, dass** das Luftfederungssystem zum Koppeln an mindestens einen Faltenbalg zum Herunterlassen und Anheben des Fahrzeugs und zum Koppeln an eine Druckversorgungseinheit (300) zur Versorgung mit Druckluft und zum Koppeln an einen Ablass (400) zum Ablassen von Druckluft ausgelegt ist, und dass das Niveauregelventil (50) weiter umfasst:
einen ersten Strömungsweg (154), der eine Strömungsverbindung zu dem mindestens einen Faltenbalg bereitstellt,
einen zweiten Strömungsweg (155), der eine Strömungsverbindung zur Druckversorgungseinheit (300) oder zum Ablass (400) bereitstellt,
eine erste Kammer (151) mit dem Anker (57),
einen ersten Kolben (161),
eine zweite Kammer (162), wobei der erste Kolben (161) zum Verbinden bzw. Abtrennen des ersten Strömungswegs (154) mit dem/vom zweiten Strömungsweg (155) in der zweiten Kammer (162) bewegbar ist,
einen Magnetventilablass (152),
einen Steuerdruckeinlass (153) zur Bereitstellung eines Steuerdrucks,
wobei die erste Stellung (51) einen Magnetventilablass (152) und die zweite Stellung (52) den Steuerdruckeinlass (153) öffnet, wobei die zweite Kammer (162) so mit der ersten Kammer (151) verbunden ist, dass der Steuerdruck in der zweiten Stellung (52) den ersten Kolben (161) zum Verbinden bzw. Abtrennen des ersten Strömungswegs (154) mit dem/vom zweiten Strömungsweg (155) antreibt.

9. Luftfederungssystem nach Anspruch 8, **dadurch gekennzeichnet, dass** das Niveauregelventil (50) weiter einen zweiten Kolben (171) umfasst, der zum Abtrennen des ersten Strömungswegs (154) vom zweiten Strömungsweg (155) vorgespannt ist, und dass der erste Kolben (161) zur Bewegung des zweiten Kolbens (171) zum Verbinden des ersten Strömungswegs (154) mit dem zweiten Strömungsweg (155) auf Zunahme eines Volumens der zweiten Kammer (162) ausgelegt ist.

10. Luftfederungssystem nach Anspruch 8 oder 9, **dadurch gekennzeichnet, dass** es weiter ein Schaltventil umfasst, das zum Verbinden der Druckversorgungseinheit (300) oder des Ablasses (400) mit dem zweiten Strömungsweg (155) ausgelegt ist.

11. Luftfederungssystem nach einem der Ansprüche 8 bis 10, **dadurch gekennzeichnet, dass**
es weiter den mindestens einen Faltenbalg, die Druckversorgungseinheit (300) und den Ablass (400) umfasst.

12. Fahrzeug, **gekennzeichnet durch**
ein Luftfederungssystem nach einem der Ansprüche 8 bis 11.

13. Verfahren zur Steuerung eines elektropneumatischen Niveauregelventils (50) eines Fahrzeugs durch ein Steuersignal (60), wobei das Niveauregelventil einen Magnet (55) mit einem Anker (57) umfasst, wobei der Anker (57) auf Empfang des Steuersignals (60) zwischen einer ersten Stellung (51) zum Ablassen des Niveauregelventils (50) und einer zweiten Stellung (52) zur Beaufschlagung des Niveauregelventils (50) bewegbar ist,
**gekennzeichnet durch**
die Erzeugung (S110) eines pulsbreitenmodulierten (PWM) Signals als Steuersignal (60) zum Regeln der Herunterlassgeschindigkeit das Fahrzeugs, wobei das PWM-Signal einen ersten Signalpegel (61), einen zweiten Signalpegel (62) sowie eine Impulsperiode (T), die die Dauer des ersten Signalpegels (61) bestimmt, umfasst;
die Übertragung (S120) des PWM-Signals an den Magnet (50) zum Treiben des Ankers (57) in die erste Stellung (51) mit dem ersten Signalpegel (61) und zum Treiben des Ankers (57) in die zweite Stelluing (52) mit einem zweiten Signalpegel (62); und
das Variieren (S130) der Impulsperiode (T) zur Steuerung einer Druckluftströmung durch das Niveauregelventil (50).

14. Verfahren nach Anspruch 13, **dadurch gekennzeichnet, dass**
der Schritt der Erzeugung (S110) das PWM-Signal (60) als zyklisches Signal mit einer Frequenz (f) erzeugt,
und dass das Verfahren weiter umfasst
das Schalten in eine erste Betriebsart durch Wahl der Frequenz (f) unter einer Schwellenfrequenz,
das Schalten in eine zweite Betriebsart durch Wahl der Frequenz (f) über der Schwellenfrequenz, wobei der Anker (57) bei einer über einer Schwellenfrequenz liegenden Frequenz des PWM-Signals (60) nicht zwischen der ersten und der zweiten Stellung (51, 52) bewegbar ist, und
das Variieren der Stellung des Ankers (57) zwischen der ersten Stellung (51) und der zweiten Stellung (52) in der zweiten Betriebsart durch den Schritt des Variierens (S130) der Impulsperiode (T).

15. Computerprogramm mit einem Programmcode zur Ausführung des Verfahrens nach Anspruch 13 oder 14, wenn das Computerprogramm auf einem Computer oder einem Prozessor abläuft.

## Revendications

1. Dispositif de commande d'une soupape (50) électropneumatique de mise à niveau d'un véhicule par un signal (60) de commande, la soupape de mise à niveau comprenant un aimant (55) avec une armature (57), dans lequel, en réaction à la réception du signal (60) de commande, l'armature (57) est mobile entre une première position (51) pour purger la soupape (50) de mise à niveau et une seconde position (52) pour mettre en pression la soupape (50) de mise à niveau,
**caractérisé par**
un module (10) de générateur, configuré pour produire un signal modulé en largeur d'impulsion (PWM) comme signal (60) de commande pour commander la vitesse d'abaissement du véhicule et pour transmettre le signal PWM à l'aimant (50), le signal PWM comprenant un premier niveau (61) de signal, entraînant l'armature (57) dans la première position (51), et un second niveau (62) de signal, entraînant l'armature (57) dans la seconde position (52), et un rapport cyclique (T) définissant une durée du premier niveau (61) de signal pour commander un écoulement pneumatique passant dans la soupape (50) de mise à niveau.

2. Dispositif suivant la revendication 1, l'armature (57) ne pouvant pas être déplacée entre les première et seconde positions (51, 52) à une fréquence du signal (60) PWM au-dessus d'une fréquence de seuil,
le dispositif étant **caractérisé en ce que**
le module (110) de générateur est configuré pour produire un premier signal (60) périodique PWM d'une première fréquence en dessous de la séquence de seuil et pour produire un deuxième signal (60) périodique PWM d'une seconde fréquence au-dessus de la fréquence de seuil.

3. Dispositif suivant la revendication 2, **caractérisé en ce que**
le module (110) de générateur est configuré, en outre, pour faire aller l'armature (57) à une position définie entre la première position (51) et la seconde position (52), en commandant le rapport cyclique (T) du signal (60) PWM lorsque le module (110) de générateur produit un signal (60) périodique PWM de la seconde fréquence.

4. Dispositif suivant la revendication 3, **caractérisé en ce que**
la fréquence de seuil est comprise entre 100 Hz et 300 Hz ou d'environ 200 Hz.

5. Dispositif suivant l'une quelconque des revendications précédentes, caractérisé en ce
le module (110) de générateur est configuré, en outre, pour fournir un signal de commutation pour connecter, soit une unité (300) d'alimentation en pression, soit une purge (400) à la soupape (50) de mise à niveau, de manière à ce qu'un écoulement à partir de l'unité (300) d'alimentation en pression ou vers la purge (400) puisse être commandé en faisant varier le rapport cyclique (T).

6. Unité électrique de commande (ECU) pour commander une soupape (50) électropneumatique de mise à niveau
**caractérisée par**
un dispositif suivant l'une quelconque des revendications 1 à 5.

7. Système de suspension pneumatique d'un véhicule, le système de suspension pneumatique comprenant une soupape (50) électropneumatique de mise à niveau, ayant un aimant (55) comprenant une armature (57) à déplacer entre la première et la seconde position (51, 52),
**caractérisé par**
un dispositif suivant l'une quelconque des revendications 1 à 5 ou une unité électrique de commande suivant la revendication 6.

8. Système de suspension pneumatique suivant la revendication 7, **caractérisé en ce que**
le système de suspension pneumatique est configuré pour se coupler à au moins un soufflet afin d'abaisser et de soulever le véhicule, et pour se coupler à une unité (300) d'alimentation en pression pour fournir de l'air comprimé, et pour se coupler à une purge (400) pour purger de l'air comprimé, et **en ce que** la soupape (50) de mise à niveau comprend, en outre :
un premier trajet (154) d'écoulement procurant une communication fluidique vers le au moins un soufflet,
un deuxième trajet (155) d'écoulement procurant une communication fluidique vers l'unité (300) d'alimentation en pression ou la purge (400),
une première chambre (151) ayant l'armature (57),
un premier piston (161),
une seconde chambre (162), le premier piston (161) étant mobile dans la seconde chambre (162) pour mettre en communication le premier trajet (154) d'écoulement avec le second trajet (155) d'écoulement ou pour interrompre cette mise en communication,
une purge (152) d'électrovanne,
une entrée (153) de pression de commande pour procurer une pression de commande,
dans lequel la première position (51) ouvre une purge (152) d'électrovanne et la deuxième position (52) ouvre l'entrée (153) de pression de commande, la seconde chambre (162) communiquant avec la première chambre (151), de manière à ce que, dans la seconde position (52), la pression de commande entraîne le premier piston (161) pour mettre le premier trajet (154) d'écoulement en communication avec le second trajet (155) d'écoulement ou pour faire cesser cette communication.

9. Système de suspension pneumatique suivant la revendication 8, **caractérisé en ce que**
la soupape (50) de mise à niveau comprend, en outre, un deuxième piston (171) sollicité pour faire cesser la communication entre le premier trajet (154) d'écoulement et le second trajet (155) d'écoulement et **en ce que** le premier piston (161) est configuré pour déplacer le second piston (171), afin de mettre le premier trajet (154) d'écoulement en communication avec le second trajet (155) d'écoulement, après augmentation d'un volume de la seconde chambre (162).

10. Système de suspension pneumatique suivant la revendication 8 ou la revendication 9, **caractérisé en ce qu'**
il comprend, en outre, une soupape de commutation configurée pour mettre, soit l'unité (300) d'alimentation en pression, soit la purge (400), en communication avec le second trajet (155) d'écoulement.

11. Système de suspension pneumatique suivant l'une quelconque des revendications 8 à 10, **caractérisé en ce qu'**
il comprend, en outre, le au moins un soufflet, l'unité (300) d'alimentation en pression et la purge (400).

12. Véhicule **caractérisé par**
un système de suspension pneumatique suivant l'une quelconque des revendications 8 à 11.

13. Procédé de commande d'une soupape (50) électropneumatique de mise à niveau d'un véhicule par un signal (60) de commande, la soupape de mise à niveau comprenant un aimant (55) avec une armature (57), dans lequel, en réaction à la réception du signal (60) de commande, l'armature (57) est mobile entre une première position (51) pour purger la soupape (50) de mise à niveau et une seconde position (52) pour mettre en pression la soupape (50) de mise à niveau,
le procédé étant **caractérisé par**
la production (S110) d'un signal modulé en largeur d'impulsion (PWM) comme signal (60) de commande pour commander la vitesse d'abaissement du véhicule, le signal PWM comprenant un premier niveau (61) de signal, un second niveau (62) de signal et un rapport cyclique (T) définissant une durée du premier niveau (61) de signal ;
la transmission (S120) du signal PWM à l'aimant (50) pour mettre l'armature (57) dans la première position (51) par le premier niveau (61) de signal et pour mettre (57) dans la seconde position (52) par le second niveau (62) de signal ; et
la variation (S130) du rapport cyclique (T) pour commander un écoulement pneumatique dans la soupape (50) de mise à niveau.

14. Procédé suivant la revendication 13, **caractérisé en ce que** le stade de production (S110) produit le signal (60) PWM sous la forme d'un signal périodique d'une fréquence (f),
et **en ce que** le procédé comprend, en outre,
la commutation dans un premier mode de fonctionnement, en choisissant la fréquence (f) en dessous d'une fréquence de seuil,
la commutation dans un second mode de fonctionnement, en choisissant la fréquence (f) au-dessus de la fréquence de seuil, l'armature (57) ne pouvant pas être déplacée entre la première et la seconde position (51, 52) à une fréquence du signal (30) PWM au-dessus d'une fréquence de seuil, et
la variation d'une position de l'armature (57) entre la première position (51) et la seconde position (52), dans le second mode de fonctionnement, par le stade de variation (S130) du rapport cyclique (T).

15. Programme d'ordinateur ayant un code de programme pour effectuer le procédé suivant la revendication 13 ou la revendication 14, lorsque le programme d'ordinateur est exécuté sur un ordinateur ou sur un processeur.
